Europäisches Patentamt
European Patent Office
Office européen des brevets

(11) Publication number: 0 295 352 A2

# EUROPEAN PATENT APPLICATION

(21) Application number: 87500059.8

(22) Date of filing: 21.09.87

(51) Int. Cl.[4] A01N 49/00 , //(A01N49/00, 31:14)

(30) Priority: 17.06.87 ES 8702056

(43) Date of publication of application: 21.12.88 Bulletin 88/51

(84) Designated Contracting States: BE DE FR GB GR IT NL

(71) Applicant: SAININ, S.A.
Massenet, 19
E-08191 Rubi (Barcelona)(ES)

(72) Inventor: Lewkowycz Kysil, Román
Bofarull, 46
E-08027 Barcelona(ES)

(74) Representative: Gomez-Acebo y Pombo, José Miguel
c/o CLARKE, MODET & Co. Balmes, 191
E-08006 Barcelona(ES)

## (54) Tocopherol based composition, process for manufacturing same and its use to facilitate the fertility of flowers.

(57) Tocopherol composition to promote the fruit set, especially in fruit trees and plant culture, containing from 99 to 95 % by weight of tocopherol (synthetic or natural), and from 1 to 5 % by weight of a wetting agent. The tocopherol is preferably DL-tocopheryl acetate and the wetting agent is selected from the group of alkyl-aryl-polyethylene oxides. Preferably one or several growth regulating compounds are added to the tocopherol to make the fruit grow bigger and to prevent it from falling off the tree. A process is also claimed comprising the preparation of a tocopherol alcoholic solution, especially of DL-α tocopheryl acetate, at a 2 to 4 % by weight, and adding 1 to 5 % by weight of a wetting agent such as alkyl-aryl-polyethylene oxide. Finally, the invention claims the use of tocopherol compositions to facilitate the fertility of flowers, especially in the raising of plants and trees, by spraying a 2 to 4 grams tocopherol/100 liters of spray solution on plants or trees.

EP 0 295 352 A2

## "TOCOPHEROL BASED COMPOSITION, PROCESS FOR MANUFACTURING SAME AND ITS USE TO FACILITATE THE FERTILITY OF FLOWERS"

This invention relates to a TOCOPHEROL based composition, a process for manufacturing same, and its use to promote the fertility of flowers, especially in the raising of plants and trees.

TOCOPHEROL (Vitamin E) is present in vegetable oils (wheat germ, corn), green leaves, milk, eggs and other food products. A daily intake of approximately 25 mg of Vitamin E is covered by normal feeding habits.

Mattil and Conklin (1920) showed for the first time the existance and function of TOCOPHEROL when studying the action of food on animal reproduction, considering TOCOPHEROL as the "anti-sterility" vitamin.

Evan et al (1936) isolated Vitamin E from wheat germ and proposed the present "TOCOPHEROL" nomenclature from the Greek word TOCOS - "birth" and PHEREIN = "to carry". Subsequently, many natural isomers were found. The α TOCOPHEROL being the most active one.

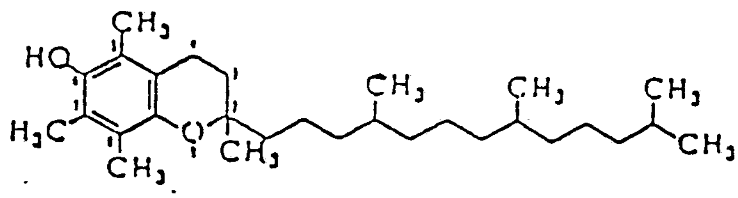

Karrel et al. (1938) synthetized αTOCOPHEROL by condensing trimethylhydroquinone with phytyl bromide. Subsequently John (1942), Isler (1963) and other authors dealt with TOCOPHEROL synthesis.

The therapeutical importance of TOCOPHEROL in human and veterinary medicine is continuously growing, in gynecology(miscarriage, climateric), as well as in the treatment of muscular atrophy or as an antitoxic antioxidant.

It is also known that the Vitamin E deficiency in dogs and in different species of rodents leads to a muscular dystrophy. In rats, the Vitamin E deficiency leads to sterility.

It is also suspected that a lack of Vitamin E in humans provokes their sterility.

In addition to its function in animals, tocopherols are used commercially as antioxidants for delaying the fat rancidity phenomenon, especially in those products containing vegetable oils. However, nothing in the Prior Art indicates that tocopherols could contribute towards the fertility of flowers.

It is also known that the application of (3S, 3As 4S, 7aS, 7S, 9aR, 9bR, 12S)-7,12 dihydroxy-3-methyl-6-methylene-2-oxyperhydro-4a,7-methane-9b,3-propenol(1,2-b)furan-4-carboxylic acid (giberellic acid) improves the fruit set in fruit trees, citrus, and other cultivated plants, being of great importance for the most plants having a fruit set difficulties. However, the giberellic acid has the disadvantage of deforming the fruit in certain cases, such as in the case of pear trees, and it is also an expensive product obtained by microbial fermentation.

These problems are solved, according to the invention by using Vitamin E (tocopherol), which is a natural product, well known in the human medicine. It is supposed, according to the invention, the tocopherol, being an antioxidant, prevents the de struction of the natural plant hormones, thus prolonging their action, and permits that growth regulating compounds can be added, to the tocopherol to increase the size of the fruits and to help the fruits to stay longer on the tree.

There has been found now (and this is the object of the present invention), a tocopherol composition which facilitates the fertility of flowers, especially in cultivated plants and trees, comprising 99 to 95 % by weight of natural or synthetic tocopherol, and 1 to 5 % by weight of a wetting agent.

According to a preferred aspect of the invention, the tocopherol is preferably DL-alpha-tocopheryl acetate.

According to another preferred aspect of the invention, the wetting agent is selected from the group consisting of alkyl-aryl-polyoxyethylenes.

According to another preferred aspect of the invention, one or several growth regulating compounds are added to tocopherol to increase the size of the fruit and to prevent it from dropping off and/or from the spoilage on the tree.

Another important aspect of the invention relates to a process of manufacturing said tocopherol

composition for facilitating the fertility of flowers, especially in plants and trees, comprising the preparation of a tocopherol alcoholic solution, especially DL alpha-tocopherol, at a 2 to 4 % by weight and adding 1 to 5% by weight of a wetting agent, such as alkyl-aryl-polyoxyethylene.

A third important aspect of the present invention refers to the use of tocopherol based compositions, obtained from the afore -mentioned process, to improve the fertility of flowers, especially in the raising of plants and trees, consisting in spraying said composition on to the plants or trees at 2 to 4 grammes tocopherol per 100 liters of the spray solution.

The advantages of the invention will be made obvious by means of an example, and the attached table which shows data related to experiments carried out with a composition obtained from the process, object of the present invention.

**EXAMPLE**

1) A 2-4 % DL α-tocopheryl acetate alcoholic solution is prepared and a 1-5 % wetting agent added.

2) 50-200 ml of this solution are dissolved in 100 liters of water and sprayed on plants and trees, at 6-15 litres per tree, in the case of a 10 year old Mandarin tree. The time for treatment is critical according to the tree type, for example:

-Citrus variety

- Orange tree: 75% fallen petals
- Lemon tree: 95% fallen petals
- "Clementine" tree: 95 % fallen petals

-Pear tree:

- "Blanquilla" pear: 30-60 % open flowers

| | CROP VARIETY | AREA | YEAR | % FRUIT SET | | | | UNTREATED CONTROL |
|---|---|---|---|---|---|---|---|---|
| | | | | GIBERELLIC ACID | | TOCOPHEROL | | |
| | | | | DOSE g/hl | ACTION | DOSE g/hl | ACTION | |
| Fruit trees (pears) | BLANQUILLA | Lérida | 1.971 | 1.5 | 50-67 | 2 | 100 | 50 |
| | BLANQUILLA | Lérida | 1.972 | 1.5 | 95-100 | 2 | 80-100 | 70 |
| CITRUS | MANDARIN VARIOUS | Castellón | 1.972 | 1.0 | 50 | 2 | 50 | 50 |
| | CLEMENTINE | Villareal | 1.984 | 1.0 | 50 | 2 | 50 | 45 |
| | CLEMENULES | Faura | 1.986 | 0.72 | 53.5 | 4 | 57.5 | 54.8 |
| | NAVEL | Castellón | 1.986 | 0.72 | 60.0 | 4 | 62.5 | 51.5 |
| | NAVELATE | Faura | 1.986 | 0.72 | 37.5 | 4 | 40.0 | 22.5 |

FRUIT SET IN CITRUS AND FRUIT TREES: COMPARATIVE TESTS MADE OVER SEVERAL YEARS. (1971 - 1986).

## Claims

1.- Tocopherol composition to improve the fruit set, especially in plant and tree culture. characterized in that it contains 99 to 95 % by weight of synthetic or natural tocopherol and 1 to 5 % by weight of a wetting agent.

2.- Composition according to Claim 1, characterized in that said tocopherol is preferably DL-αtocopheryl acetate.

3.- Composition according to Claim 1, characterized in that the wetting agent is selected from the group of alkyl-aryl-polyethylene oxides.

4.- Composition according to Claims 1, 2, 3, characterized in that one or several growth regulating compounds are added to said tocopherol to increase the size of the fruit and to prevent it from dropping off the tree.

5.- A process for manufacturing tocopherol composition according to Claims 1 to 3, characterized by preparing a tocopherol alcoholic solution, especially DL- αtocopheryl acetate, at a 2 to 4 % by weight and adding 1 to 5 % by weight of a wetting agent such as alkyl-aryl-polyethylene oxide.

6.- The use of tocopherol compositions according to Claims 1 to 4, obtainable according to the Claim 5, to improve the fertility of flowers,. especially in the plant and tree culture, characterized in that said composition is sprayed on plants and trees at 2 to 4 grammes of tocopherol/100 litres of spray solution.